# EUROPEAN PATENT SPECIFICATION

(11) **EP 3 825 091 B1**
(45) Date of publication and mention of the grant of the patent: **03.05.2023**
(21) Application number: 20207744.2
(22) Date of filing: 16.11.2020
(51) Int. Cl.: B29C 45/14, B29C 45/56

(54) **MOLD FOR PRODUCING ANY ONE COATED COMPONENT OF A VEHICLE, ASSOCIATED MULTI-STEP METHOD AND PRODUCT THUS OBTAINED**
FORM ZUR HERSTELLUNG EINES BELIEBIGEN BESCHICHTETEN BAUTEILS EINES FAHRZEUGS, ZUGEHÖRIGES MEHRSTUFIGES VERFAHREN UND DADURCH ERHALTENES PRODUKT
MOULE POUR LA FABRICATION D'UN COMPOSANT REVÊTU D'UN VÉHICULE, PROCÉDÉ À PLUSIEURS ÉTAPES ASSOCIÉ ET PRODUIT AINSI OBTENU

(30) Priority: 20.11.2019 IT 201900021690
(43) Date of publication of application: 26.05.2021
(73) Proprietor: Sapa S.P.A., 20144 Milano (MI) (IT)
(72) Inventor: AFFINITA, Antonio, 80121 Napoli (NA) (IT)
(74) Representative: Fiammenghi, Eva

(56) References cited:
- EP-A1- 2 070 681
- WO-A2-2004/099480

## Description

### Field of the art

The present invention operates in the field of systems and methods for molding thermoplastic polymers in the automotive field. More in detail that object to be produced with the multi-step method and with the mold described below is an element with the aesthetic coating of the vehicle, such as a loading deck or a backrest coated with long-pile fabric, polyurethane or leather.

### Prior art

Presently, the automotive field is eagerly seeking to limit the weight of cars, without however giving up the high performances that have been attained.

One component present in all vehicles is a loading deck, or rear deck. This consists of a substantially flat element on which objects are set up to a certain load, before seeing a bending of such deck. While in the smallest cars this element is normally situated at the trunk, in vans this is an element of fundamental importance since it must withstand high loads and even sometimes high operating temperatures. This may be due to the proximity to elements which, during the van driving, are heated, such as elements of the engine compartment.

Presently, the production of these components of the vehicles is very long and costly, considerably increasing the cost of the piece that the automobile manufacturers must sustain in order to purchase the decks and backrests from the suppliers.

The base material is compressed cardboard that is subjected to a gluing step by means of a suitable machine. A further machine laminates the textile coating (e.g. moquette) on the obtained element, which characterizes the external surface of the loading decks and of several backrests. The final finish, in which the textile coating is cut and folded in order to give acceptable aesthetic value to the object, is executed by hand.

Alternatively, the loading decks are attained by means of the injection of thermoplastic material in a suitable mold. Also this process, however, has critical features due mainly to the crushing of the coating due to the high (but necessary) pressure inside the mold. Indeed, it is not possible, according to the known techniques, to obtain a product via injection molding with a pressure lower than 700 bar, pressure which renders inevitable the crushing of the coating and a poor aesthetic appearance.

Also the weight of the loading deck and its mechanical strength are not optimal if the object is obtained according to any one of the abovementioned two techniques. While cardboard deck is clearly not very strong, that made of plastic is stronger but much heavier. Nevertheless, the introduction of expanding agents into the plastic mixture is not always possible due to the pressure that must be developed in the mold so that the entire figure is filled.

WO2004/099480 discloses a method for manufacturing at least partly plastic vehicle parts in a mold with at least one mold cavity, comprising the steps of: at least partly closing the mold, wherein the at least one mold cavity is brought in a first position by means of at least one movable wall part of the at least one mold cavity; introducing plastic into the at least one mold cavity; upon complete closure of the mold and/or movement of the at least one movable wall part, bringing the at least one mold cavity in a second position, the at least one mold cavity in the second position having a different volume than in the first position; all this in such a manner that by bringing the at least one mold cavity from the first into the second position, the plastic fills the respective mold cavity completely.

EP2070681 discloses a method that involves pushing out a section of a decorative foil from a plane of a die plate surface at a region of a cavity between small bars, where the disk is arranged at a region of a die plate. The section is not formed at a rear side, where the small bars limit the cavity. The decorative foil is fixed in a region to be cut between a fixed rear formed decorative region and an edge of the disk. The decorative foil at an edge of the decorative region is cut and is subsequently removed from a tool. An independent claim is also included for a device for manufacturing a molded part for an interior panel.

Object of the present invention is therefore to resolve all of the abovementioned critical features, describing a molding process and a mold for making loading decks and backrests with fabric coating, with high mechanical and thermal strength, with limited weight and by means of a multi-step process which immediately gives rise to the finished piece, therefore also limiting the production costs.

More in detail, the mold and the method described hereinbelow are suitable for producing any one coated component of the vehicle, independent of the coating type.

### Description of the invention

According to the present invention, a mold is obtained and its use method is described for obtaining coated components of vehicles of any type, in particular of loading decks and of backrests, effectively resolving the abovementioned problems.

Like every mold for injection molding, also that of the present invention consists of a fixed side and a movable side which moves away from and close to the fixed side, determining the reversible taking on of an open configuration or closed configuration of said mold.

In order to make a component according to the present invention, the coating material of said product is positioned on the movable side of the mold.

The movable side is moved close to the fixed side up to a predetermined distance, normally about 5 mm.

From an upper portion of the mold, through an introduction nozzle, a predetermined amount of a thermoplastic mixture is injected into the interspace of the mold while it is still semi-open.

Said thermoplastic mixture consists of polyamide with long glass fibers or polypropylene with long glass fibers, while the coating consists of a long-pile synthetic fabric, polyurethane coupled with PVC or leather.

The injection with mold open occurs in order to contain the pressure inside the mold between 200 bar and 600 bar, preferably 400 bar, so as to not crush the surface of the coating or in any case its surface finish, with a greater aesthetic appearance than the known products. Among the advantages of the present invention, there is also the improved mechanical strength of the product thus obtained, which is greater than the known products, due to the use of polyamide or polypropylene with long glass fibers. In addition, the use of these materials allows obtaining products with high resistance to an operating temperature up to 80°C.

Once the mixture is injected in the mold, the movable side starts to approach the fixed side while, at its interior, a plurality of movable frames is moved into the interspace in order to uniformly push and distribute the thermoplastic mixture and obtain the desired thickness of the finished product, avoiding the exertion of excessive pressures.

In the case of particularly complex figures, advantageously, the present invention provides that a plurality of movable frames can be arranged that "spread" the thermoplastic mixture during the closing of the mold.

Once the movable side has reached the fixed side and the mold is closed, it will be necessary to wait for the solidification time of the mixture and, subsequently, open the mold. The product just solidified will be found on the fixed side. Here, a removal device will allow the detachment of the element, solidified by now, from said fixed side of said mold.

Several further improved variants of the present invention provide that, in the thermoplastic mixture, a predetermined amount of an expanding agent is added that is suitable to react with the thermoplastic polymer before the solidification thereof, increasing the volume thereof. Due to this expedient, the backrest or the loading deck obtained according to the present invention will also have the advantage of being lighter than the products known up to now. A further variant of the mold, object of the present invention, provides for the presence of a cutting edge, placed at the movable side of the mold, on the border between the interspace and a mold portion suitable to house the coating which exceeds the shape of the finished object. When the mold takes on the closed configuration, a step then occurs for partial cutting of an edge of said coating which exceeds the pre-established shape.

The backrest or the loading deck then exits from the mold with a precut part that will then be folded by a folding machine suitable to fold said coating portion exceeding the pre-established shape, aesthetically enhancing said component.

The advantages offered by the present invention are evident in light of the description set forth up to now and will be clearer due to the enclosed figures and to the relative detailed description.

### Description of the figures

The invention will be described hereinbelow in at least a preferred embodiment by way of a non-limiting example with the aid of the enclosed figures, in which:
- FIGURE 1 shows the movable side 102 (Fig. 1a) and the fixed side 101 (Fig. 1b) of the mold 100 of the present invention.
- FIGURE 2 illustrates the fixed side 101 in detail.

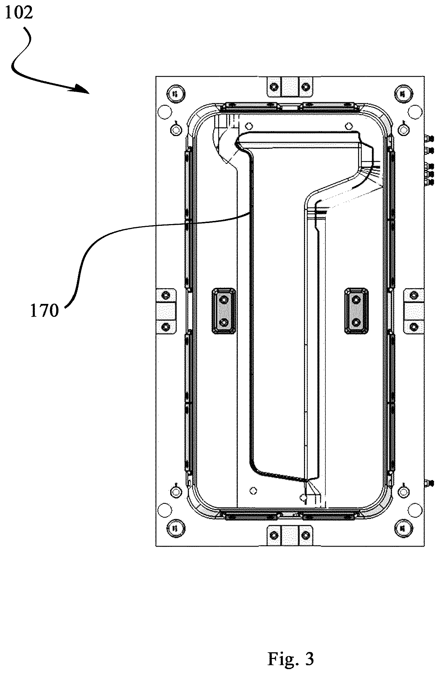

- FIGURE 3 shows the movable side 102 in detail in the version provided with cutting edge 170.

### Detailed description of the invention

The present invention will now be illustrated as a merely exemplifying but not limiting or binding example, with reference to the figures which illustrate several embodiments relative to the present inventive concept.

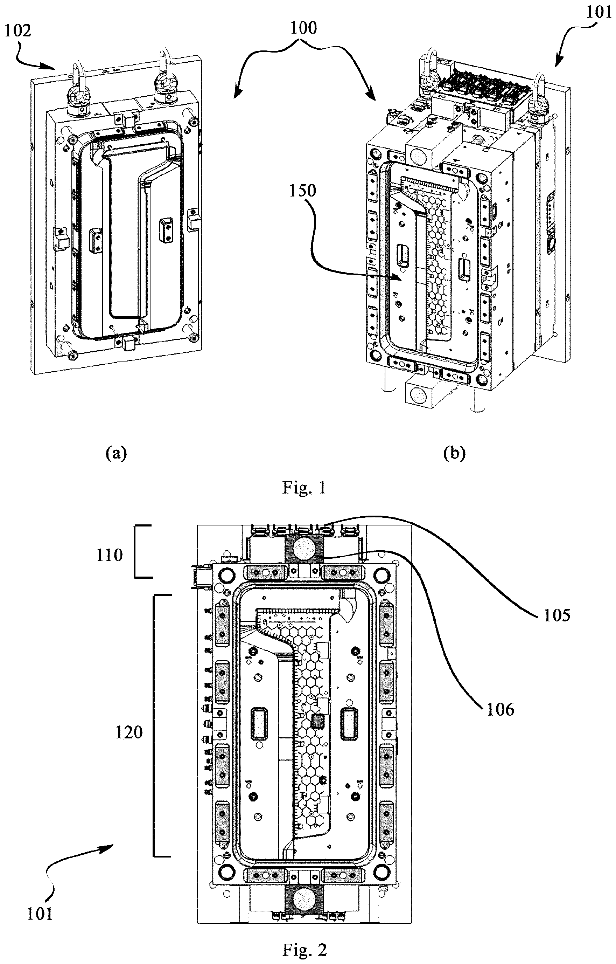

With reference to FIG. 1, the two parts of a mold 100 according to the present invention are shown.

The fixed side 101 and the movable side 102 are suitable to reversibly take on an open configuration in which said sides 101-102 are distanced by a predetermined distance and a closed configuration, in which defined between said sides 101-102 is an interspace 120 having the shape of the loading deck.

The fixed side 101 has an upper portion 110 on which an injection nozzle 105 and a removal device 106 are arranged. The injection nozzle 105 is suitable to introduce, into the interspace 120 of the mold 100, a predetermined amount of the thermoplastic mixture suitable to constitute the load-bearing structure of the loading deck.

The fixed side 101 also has a plurality of movable frames 150, revolutionary element of the present invention. This allows obtaining the uniform and expected distribution of the material in the interspace 120, avoiding pressures that exceed 600 bar and which would crush the coating surface.

Also present on the fixed side 101 is a removal device 106 which allows the detachment of the loading deck, solidified by now, once the molding is completed.

On the movable side 102, however, the presence of a cutting edge 170 can be seen, which is suitable to perform a partial cutting of a coating portion which exceeds the pre-established shape for the loading deck.

The method associated with the use of said mold provides for the following steps:
- mixing polyamide with long glass fibers or polypropylene with long glass fibers;
- positioning of the coating at the movable side 102 of the mold 100;
- injecting the molten mixture into the interspace 120 of the mold 100 which is found in open configuration;
- closing the mold 100 and simultaneously compressing the molten material, inside the interspace 120, by the movable frames 150, until the entire figure is filled;
- during the closing, partial cutting of an edge of the coating which exceeds the pre-established shape;
- waiting for a solidification time of the thermoplastic polymer and new opening of the mold 100;
- removal of the loading deck, solid by now;
- folding of the exceeding edge by a folding machine.

The loading deck obtained with the mold 100 and by means of the method described above is also the object of the patent protection offered by the enclosed claims. This by virtue of the fact that a loading deck for vehicles made of polyamide or of polypropylene with long glass fibers, coated with long-pile synthetic fabric that is not crushed in the production process, resistant to an operating temperature up to 80°C, obtained by means of an injection molding process with mold open, was not attainable before the present invention. The same can be stated for backrests having the same characteristics.

Finally, it is clear that modifications, additions and variations can be made to the invention described up to now which are obvious for a man skilled in the art, without departing from the protective scope that is provided with the enclosed claims.

## Claims

1. Mold (100) for producing any coated component of a vehicle, consisting of a fixed side (101) and a movable side (102) suitable to reversibly take an open configuration wherein said sides (101-102) are distanced by a predetermined distance and a closed configuration, wherein defined between said sides (101-102) is an interspace (120) having the shape of the product to be made, i.e. of the coated component to be produced; said component being coated with long-pile synthetic fabric, polyurethane coupled with PVC or leather; said mold (100) being **characterized in that** it comprises:
- an upper portion (110) of said fixed side (101) on which at least an injection nozzle (105) and a removal device (106) are arranged; said injection nozzle (105) being suitable to introduce, into the interspace (120) of said mold (100), a predetermined amount of a thermoplastic mixture suitable to constitute the load-bearing structure of said coated component; said removal device (106) being suitable to allow the detachment of the already solidified element from said fixed side (101) of said mold (100) once the molding has been completed;
- a plurality of movable frames (150) suitable to uniformly push and distribute the thermoplastic mixture at each point of said interspace (120) before the closure of said mold (100).

2. Mold (100) for producing any coated component of a vehicle, according to the preceding claim 1, **characterized in that** said movable side (102) comprises a cutting edge (170) suitable to perform a partial cutting of a portion of said coating which exceeds a pre-established shape; said cutting occurring when said mold (100) takes said closed configuration.

3. Mold (100) for producing any coated component of a vehicle, according to any one of the preceding claims, **characterized in that** it is connected to a folding machine suitable to fold said coating portion exceeding the pre-established shape, aesthetically enhancing said coated component.

4. Multi-phase method for producing any coated component of a vehicle, by means of a mold (100) according to any one of the preceding claims 1 to 3, said method being **characterized in that** it comprises the steps of:
- mixing a pre-selected thermoplastic polymer, in the molten state, with a predetermined percentage of a fibrous material;
- positioning a coating made of long-pile synthetic fabric, made of polyurethane or made of leather, at a movable side (102) of said mold (100);
- injecting, from an injection nozzle (105) on a fixed side (101) of said mold (100), a predetermined amount of said molten mixture into the interspace (120) of said mold (100) in the open configuration;
- closing said mold (100) and simultaneously compressing the molten material, in said interspace (120), by means of a plurality of movable frames (150), until the entire figure is filled;
- waiting for a solidification time for said thermoplastic polymer and a new opening of said mold (100);
- removal of said solid component, solid by now.

5. Multi-phase method for producing any coated component of a vehicle, according to the preceding claim 4, **characterized in that** during the closing of said mold (100), a step for partial cutting an edge of said coating which exceeds a pre-established shape is carried out, **and in that** downstream of said removal a step for folding said exceeding edge is carried out by means of a folding machine.

6. Multi-phase method for producing any coated component of a vehicle, according to any one of the preceding claims 4 or 5, **characterized in that** said thermoplastic polymer consists of a polyamide mixture with long glass fibers or polypropylene with long glass fibers.

7. Multi-phase method for producing any coated component of a vehicle, according to any one of the preceding claims 4 to 6, **characterized in that** during the mixing step, said thermoplastic polymer is added with a predetermined amount of an expanding agent, suitable to react with the thermoplastic polymer before the solidification thereof, increasing the volume thereof.

8. Multi-phase method for producing any coated component of a vehicle, according to any one of the preceding claims 4 to 7, **characterized in that** the pressure in said mold (100) is comprised between 200 bars and 600 bars, preferably 400 bars.

## Patentansprüche

1. Form (100) zur Herstellung eines beliebigen beschichteten Bauteils eines Fahrzeugs, bestehend aus einer befestigte Seite (101) und einer beweglichen Seite (102), die geeignet sind, reversibel eine offene Konfiguration, in der die Seiten (101-102) um einen vorgegebenen Abstand beabstandet sind, und eine geschlossene Konfiguration einzunehmen, wobei zwischen den Seiten (101-102) ein Zwischenraum (120) definiert ist, der die Form des herzustellenden Produkts, d. h. des herzustellenden beschichteten Bauteils, aufweist; wobei das Bauteil mit langflorigem synthetischem Gewebe, Polyurethan gekoppelt mit PVC oder Leder beschichtet ist; wobei die Form (100) **dadurch gekennzeichnet ist, dass** sie aufweist:
- einen oberen Teil (110) der befestigten Seite (101), auf dem zumindest eine Einspritzdüse (105) und eine Vorrichtung (106) zum Entfernen angeordnet sind; wobei die Einspritzdüse (105) geeignet ist, in den Zwischenraum (120) der Form (100) eine vorgegebene Menge einer thermoplastischen Mischung einzubringen, die geeignet ist, die lasttragende Struktur des beschichteten Bauteils zu bilden; wobei die Vorrichtung (106) zum Entfernen geeignet ist, das Abnehmen des bereits verfestigten Elements von der befestigten Seite (101) der Form (100) zu ermöglichen, sobald das Formen abgeschlossen ist;
- mehrere bewegliche Rahmen (150), die geeignet sind, die thermoplastische Mischung an jedem Punkt des Zwischenraums (120) vor dem Schließen der Form (100) gleichförmig zu drücken und zu verteilen.

2. Form (100) zur Herstellung eines beliebigen beschichteten Bauteils eines Fahrzeugs nach dem vorhergehenden Anspruch 1, **dadurch gekennzeichnet, dass** die bewegliche Seite (102) eine Schneidkante (170) aufweist, die geeignet ist, ein teilweises Schneiden eines Teils der Beschichtung, der über eine vorgegebene Form hinausgeht, durchzuführen; wobei das Schneiden erfolgt, wenn die Form (100) die geschlossene Konfiguration annimmt.

3. Form (100) zur Herstellung eines beliebigen beschichteten Bauteils eines Fahrzeugs nach einem der vorhergehenden Ansprüche, **dadurch gekennzeichnet, dass** sie mit einer Faltmaschine verbunden ist, die geeignet ist, den Teil der Beschichtung, der über die vorgegebene Form hinausgeht, zu falten und so das beschichtete Bauteil ästhetisch aufzuwerten.

4. Mehrstufiges Verfahren zur Herstellung eines beliebigen beschichteten Bauteils eines Fahrzeugs mittels einer Form (100) nach einem der vorhergehenden Ansprüche 1 bis 3, wobei das Verfahren **dadurch gekennzeichnet ist, dass** es die folgenden Schritte aufweist:
- Mischen eines vorgewählten thermoplastischen Polymers im geschmolzenen Zustand mit einem vorgegebenen Prozentsatz eines Fasermaterials;
- Positionieren einer Beschichtung aus einem langflorigen synthetischen Gewebe aus Polyurethan oder aus Leder an einer beweglichen Seite (102) der Form (100);
- Einspritzen einer vorgegebenen Menge der geschmolzenen Mischung aus einer Einspritzdüse (105) auf einer festen Seite (101) der Form (100) in den Zwischenraum (120) der Form (100) in der offenen Konfiguration;
- Schließen der Form (100) und gleichzeitiges Komprimieren des geschmolzenen Materials in dem Zwischenraum (120) mit Hilfe mehrerer beweglicher Rahmen (150), bis die gesamte Figur gefüllt ist;
- Abwarten einer Verfestigungszeit für das thermoplastische Polymer und ein neues Öffnen der Form (100);
- Entnahme des festen Bauteils, das nun fest ist.

5. Mehrstufiges Verfahren zur Herstellung eines beliebigen beschichteten Bauteils eines Fahrzeugs nach dem vorhergehenden Anspruch 4, **dadurch gekennzeichnet, dass** während des Schließens der Form (100) ein Schritt zum teilweisen Schneiden einer Kante der Beschichtung, die über eine vorher festgelegte Form hinausgeht, durchgeführt wird, **und dadurch, dass** stromabwärts von dem Entfernen ein Schritt zum Falten der darüber hinausgehenden Kante mittels einer Faltmaschine durchgeführt wird.

6. Mehrstufiges Verfahren zur Herstellung eines beliebigen beschichteten Bauteils eines Fahrzeugs nach einem der vorhergehenden Ansprüche 4 oder 5, **dadurch gekennzeichnet, dass** das thermoplastische Polymer aus einer Polyamidmischung mit langen Glasfasern oder Polypropylen mit langen Glasfasern besteht.

7. Mehrstufiges Verfahren zur Herstellung eines beliebigen beschichteten Bauteils eines Fahrzeugs nach einem der vorhergehenden Ansprüche 4 bis 6, **dadurch gekennzeichnet, dass** dem thermoplastischen Polymer während des Mischschritts eine vorgegebene Menge eines Expansionsmittels zugesetzt wird, das geeignet ist, mit dem thermoplastischen Polymer vor dessen Verfestigung zu reagieren und dessen Volumen zu vergrößern.

8. Mehrstufiges Verfahren zur Herstellung eines beliebigen beschichteten Bauteils eines Fahrzeugs nach einem der vorhergehenden Ansprüche 4 bis 7, **dadurch gekennzeichnet, dass** der Druck in der Form (100) zwischen 200 bar und 600 bar, vorzugsweise 400 bar, aufweist.

## Revendications

1. Moule (100) de production de tout composant revêtu d'un véhicule, consistant en un côté fixe (101) et un côté mobile (102) appropriés pour adopter de manière réversible une configuration ouverte dans laquelle lesdits côtés (101-102) sont éloignés d'une distance prédéterminée et une configuration fermée dans laquelle entre lesdits côtés (101-102) est défini un espace intermédiaire (120) présentant la forme du produit à fabriquer, c'est-à-dire du composant revêtu à produire ; ledit composant étant revêtu d'un tissu synthétique à longs poils, de polyuréthane couplé à du PVC ou de cuir ; ledit moule (100) étant **caractérisé en ce qu'**il comprend :
- une partie supérieure (110) dudit côté fixe (101) sur laquelle sont disposés au moins une buse d'injection (105) et un dispositif de retrait (106) ; ladite buse d'injection (105) étant appropriée pour introduire, dans l'espace intermédiaire (120) dudit moule (100), une quantité prédéterminée d'un mélange thermoplastique pour constituer la structure porteuse dudit composant revêtu ; ledit dispositif de retrait (106) étant approprié pour permettre le détachement de l'élément déjà solidifié vis-à-vis dudit côté fixe (101) dudit moule (100) une fois que le moulage a été achevé ;
- une pluralité de cadres mobiles (150) appropriés pour pousser et distribuer uniformément le mélange thermoplastique au niveau de chaque point dudit espace intermédiaire (120) avant la fermeture dudit moule (100).

2. Moule (100) de production de tout composant revêtu d'un véhicule, selon la revendication précédente 1, **caractérisé en ce que** ledit côté mobile (102) comprend un bord coupant (170) approprié pour réaliser une coupe partielle d'une partie dudit revêtement qui dépasse d'une forme préétablie ; ladite coupe survenant lorsque ledit moule (100) adopte ladite configuration fermée.

3. Moule (100) de production de tout composant revêtu d'un véhicule, selon l'une des revendications précédentes, **caractérisé en ce qu'**il est relié à une machine de pliage appropriée pour plier ladite partie de revêtement dépassant de la forme préétablie, améliorant esthétiquement ledit composant revêtu.

4. Procédé à phases multiples de production de tout composant revêtu d'un véhicule, à l'aide d'un moule (100) selon l'une des revendications précédentes 1 à 3, ledit procédé étant **caractérisé en ce qu'**il comprend les étapes consistant à :
- mélanger un polymère thermoplastique présélectionné, dans l'état fondu, avec un pourcentage prédéterminé d'un matériau fibreux ;
- positionner un revêtement composé d'un tissu synthétique à longs poils, composé de polyuréthane ou composé de cuir, au niveau d'un côté mobile (102) dudit moule (100) ;
- injecter, depuis une buse d'injection (105) sur un côté fixe (101) dudit moule (100), une quantité prédéterminée dudit mélange fondu dans l'espace intermédiaire (120) dudit moule (100) dans la configuration ouverte ;
- fermer ledit moule (100) et compresser simultanément le matériau fondu, dans ledit espace intermédiaire (120), à l'aide d'une pluralité de cadres mobiles (150), jusqu'à ce que la figure entière soit remplie ;
- attendre pendant une durée de solidification dudit polymère thermoplastique et d'une nouvelle ouverture dudit moule (100) ;
- retirer ledit composant solide, dorénavant solide.

5. Procédé à phases multiples de production de tout composant revêtu d'un véhicule, selon la revendication précédente 4, **caractérisé en ce que** pendant la fermeture dudit moule (100), une étape de coupe partielle d'un bord dudit revêtement qui dépasse d'une forme préétablie est réalisée, **et en ce que,** en aval dudit retrait, une étape de pliage dudit bord qui dépasse est réalisée à l'aide d'une machine de pliage.

6. Procédé à phases multiples de production de tout composant revêtu d'un véhicule, selon l'une des revendications précédentes 4 ou 5, **caractérisé en ce que** ledit polymère thermoplastique consiste en un mélange polyamide avec de longues fibres de verre ou en polypropylène avec de longues fibres de verre.

7. Procédé à phases multiples de production de tout composant revêtu d'un véhicule, selon l'une des revendications précédentes 4 à 6, **caractérisé en ce que** pendant l'étape de mélange, ledit polymère thermoplastique est additionné d'une quantité prédéterminée d'un agent d'expansion, approprié pour réagir avec le polymère thermoplastique avant la solidification de celui-ci, augmentant le volume de celui-ci.

8. Procédé à phases multiples de production de tout composant revêtu d'un véhicule, selon l'une des revendications précédentes 4 à 7, **caractérisé en ce que** la pression dans ledit moule (100) est comprise entre 200 bars et 600 bars, de préférence de 400 bars.
